## Europäisches Patentamt
## European Patent Office
## Office européen des brevets

(19)

(11) Veröffentlichungsnummer : **0 171 566**
**B1**

(12) **EUROPÄISCHE PATENTSCHRIFT**

(45) Veröffentlichungstag der Patentschrift :
**11.10.89**

(51) Int. Cl.⁴ : **F 02 F   3/00**, F 02 F   3/08

(21) Anmeldenummer : **85108098.6**

(22) Anmeldetag : **29.06.85**

(54) **Tauchkolben für Verbrennungsmotoren.**

(30) Priorität : **17.08.84 DE 3430258**

(43) Veröffentlichungstag der Anmeldung :
**19.02.86 Patentblatt 86/08**

(45) Bekanntmachung des Hinweises auf die Patenterteilung : **11.10.89 Patentblatt 89/41**

(84) Benannte Vertragsstaaten :
**DE FR GB IT**

(56) Entgegenhaltungen :
**EP—A— 0 171 568
EP—A— 0 171 825
DE—A— 3 235 220
DE—A— 3 446 121
DE—B— 2 351 994
GB—A—   488 045**

(73) Patentinhaber : **MAHLE GMBH
Pragstrasse 26-46 Postfach 50 07 69
D-7000 Stuttgart 50 (DE)**

(72) Erfinder : **Ripberger, Emil
Brunnenstrasse 6
D-7148 Remseck 3 (DE)**
Erfinder : **Stuska, Gotthard
Lange Furche 22
D-7012 Fellbach (DE)**
Erfinder : **Ulrich, Reiner
Falkenweg 22
D-7251 Weissach (DE)**

EP 0 171 566 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Tauchkolben für Verbrennungsmotoren nach dem Oberbegriff des Patentanspruchs 1.

Der Erfindung liegt die Aufgabe zugrunde einen solchen aus DE-A-32 35 220 bekannten Kolben gewichtsmäßig erheblich leichter auszugestalten, um dadurch einen extrem leichten und im Motorbetrieb reibungsarmen Kolben zu schaffen. Der bekannte Kolben ist durch seinen zweiteiligen Aufbau weder für die Erzielung eines optimal niedrigen Gewichtes besonders geeignet, noch ist seine Handhabung praktisch, da der Kolbenbolzen nur bei in seine Einzelteile demontiertem Kolben einsetzbar ist.

Gelöst wird die erfindungsgemäße Aufgabe durch die Ausbildung des Kolbens nach den im kennzeichnenden Teil des Patentanspruchs 1 angegebenen Maßverhältnissen.

Ein solcher Kolben unterscheidet sich gattungsmäßig von einem im übrigen ähnlich ausführbaren Kolben nach der nicht vorveröffentlichten Stand der Technik gemäß Art. 54.3 EP 0 171 568A2 bei dem die Bolzennaben in den Kolbenschaft eingebunden sind.

Zweckmäßige Ausgestaltungen der Erfindung sind Gegenstand der Unteransprüche.

Bisherige Lösungen der erfindungsgemäßen Aufgabe bestanden häufig auch darin, das leichte Gewicht und die geringe Reibung im Motorbetrieb durch die verschiedenartigsten Aussparungen im Kolbenschaft zu erreichen. Bei all jenen Lösungen wurde jedoch insgesamt stets eine Schafthöhe gewählt, die ganz erheblich über der erfindungsgemäß beanspruchten lag. Zumindest im Bereich der Pleuelschwingebene weisen die kürzesten mit Ausnehmungen versehenen bekannten Kolbenschäfte noch immer Höhen auf, die so groß sind, daß sie in den Bereich der in Richtung der Kolbenachse zuunterst liegenden Kante der Bolzennaben reichen. Mit kürzeren Schäften wurde es bisher nicht für möglich gehalten, die notwendige Führung des Kolbens innerhalb des Zylinders ausreichend gewährleisten zu können. Mit dem erfindungsgemäß ausgebildeten kurzen Schaft lassen sich jedoch wider Erwarten alle an einen Kolben für Verbrennungsmotoren gestellten Anforderungen voll befriedigend erfüllen.

Ausführungsbeispiele der Erfindung sind in der Zeichnung dargestellt.

Es zeigen

Fig. 1a einen Kolben teils im Schnitt längs der Bolzenachse, teils in einem senkrecht dazu liegenden Schnitt

Fig. 1b eine Ansicht des Kolbens teils in Richtung der Bolzenachse, teils in Richtung senkrecht dazu

Fig. 1c eine Ansicht auf den Kolben von unten

Fig. 2 eine andere Ausführungsart des Kolbens in den gleichen Darstellungen wie in Fig. 1

Fig. 3 ein Kolben mit einem Streifen im Schaft in den gleichen Darstellungen wie in Fig. 1.

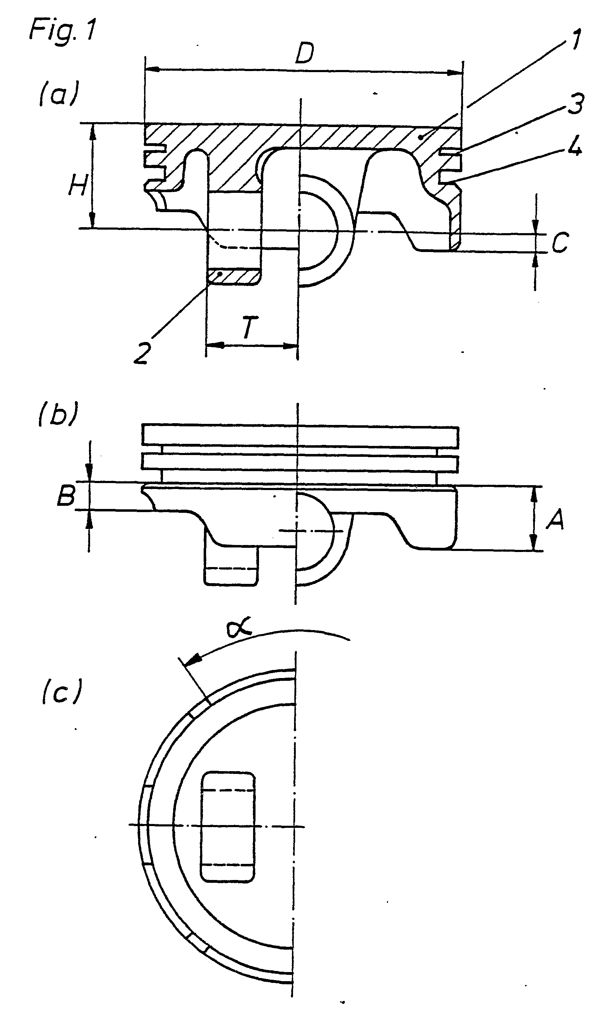

Der Kolben 1 ist aus einer Aluminium-Siliziumlegierung und weist einen Durchmesser von 78 mm auf. Die Bolzennaben 2 sind ausschließlich direkt an den Kolbenboden angeformt. Der Abstand T von der radial außen liegenden Fläche der Bolzennabe 2 zur Kolbenachse beträgt 23 mm. Der Innendurchmesser der Nabenbohrung beträgt 18 mm. Die obere Kolbenringnut 3 dient zur Aufnahme eines Verdichtungsringes, während in der unteren Kolbenringnut 4 im Motorbetrieb ein Ölabstreifring eingesetzt ist. Der Kolben besitzt eine Kompressionshöhe H von 25 mm. Auf einem Umfang von jeweils $\alpha = 30°$ zu beiden Seiten der Pleuelschwingebene mißt die Kolbenschafthöhe A 16 mm. In dem umfangsmäßig daran jeweils in Bolzenrichtung angrenzenden Bereich nimmt bei der Ausführung nach Fig. 1 die Schafthöhe auf einen Wert B = 7 mm ab. Auf dem Schaftbereich mit der Höhe A ist das Schaftende auf einer Höhe C = 3 mm zurückgenommen mit einer maximalen Zurücknahme an der unteren Schaftkante von radial 0,15 mm.

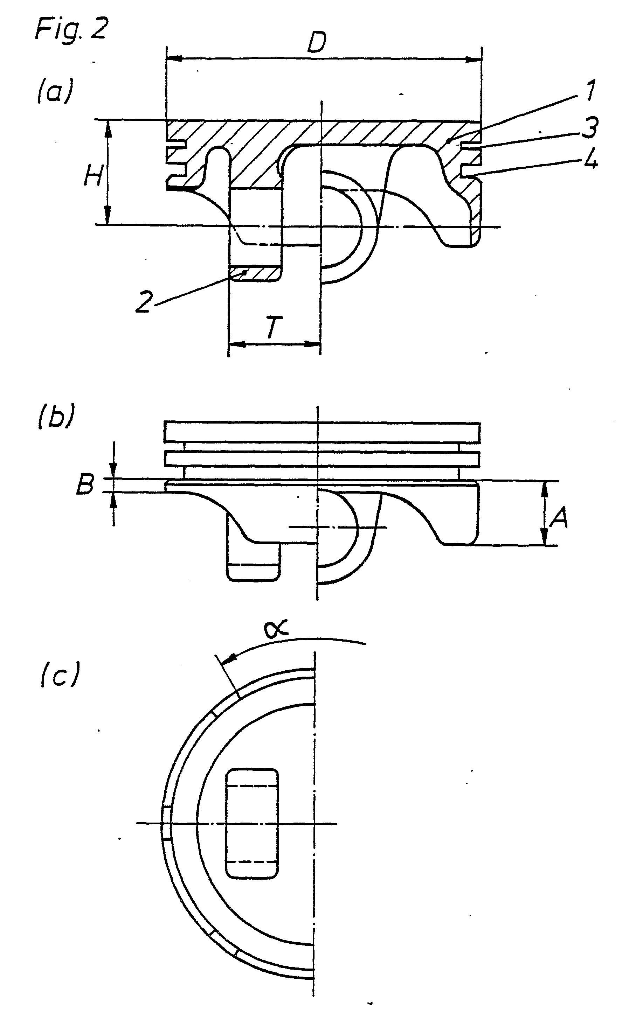

Der Kolben nach Fig. 2 unterscheidet sich von demjenigen nach Fig. 1 lediglich dadurch, daß die Schafthöhe B noch weiter verringert ist und zwar bis auf ein Maß von 3 mm.

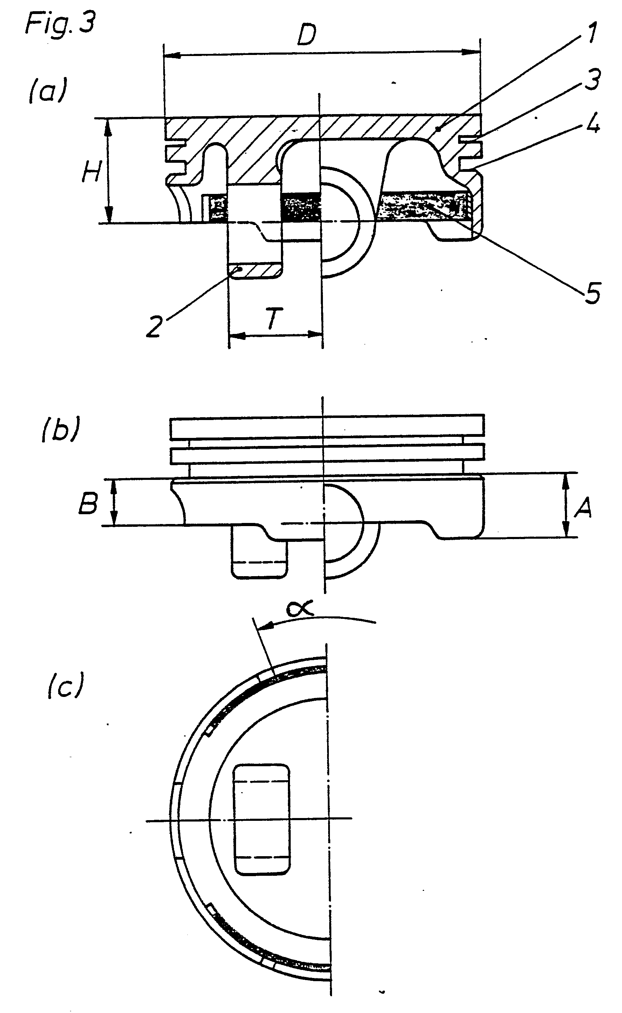

Bei der Ausführung nach Fig. 3 ist in dem Kolbenschaft ein Regelstreifen 5 aus Stahlblech vorgesehen. Dieser Regelstreifen erstreckt sich jeweils praktisch über den gesamten Umfang der Schaftinnenfläche zwischen den zur Durchführung des Kolbenbolzens durch den Schaft vorhandenen halbkreisförmigen Schaftausnehmungen. Die Verankerung des Regelstreifens erfolgt jeweils nur an seinen Enden in dem Schaftmaterial.

## Patentansprüche

1. Tauchkolben (1) für Verbrennungsmotoren, insbesondere Pkw-Otto-Motoren, bei dem die Bolzennaben (2) ausschließlich direkt und senkrecht an dem Kolbenboden ohne Berührung mit dem Kolbenschaft und dem die Ringnuten (3, 4) aufnehmenden und in den Kolbenschaft übergehenden von dem Kolbenboden ausgehenden Ringband angebunden sind, dadurch gekennzeichnet, daß der Tauchkolben einteilig ist, Schaftausnehmungen zur Durchführung des Kolbenbolzens durch den Schaft aufweist und folgende Abmessungen besitzt :

H/D = 0,20-0,35
T/D = 0,22-0,28 oder T/D = 0,295
A/D = 0,15-0,25
B/D kleiner gleich A/D

mit

D = Kolbendurchmesser
H = Kompressionshöhe
T = Abstand der radial außen liegenden Nabenflächen zur Kolbenachse

A = Schafthöhe unterhalb der unteren Ringnut in einem Umfangsbereich von alpha = 0 bis mindestens alpha = 15 Grad und maximal alpha = 60 Grad zu jeder Seite der Pleuelschwingebene

B = Schafthöhe unterhalb der unteren Ringnut in Richtung der Kolbenbolzenachse.

2. Tauchkolben nach Anspruch 1, gekennzeichnet durch,

B /D = 0,03-0,1

3. Tauchkolben nach Anspruch 1 oder 2, dadurch gekennzeichnet, daß insgesamt nur zwei Ringnuten (3 und 4) für einen Verdichtungs- und einen Ölabstreifring vorgesehen sind.

4. Tauchkolben nach einem der vorhergehenden Ansprüche, dadurch gekennzeichnet, daß in dem Schaftbereich mit der Höhe A das Schaftende auf einer Höhe von 10-25 % der Höhe A radial leicht eingezogen ist mit einer maximalen radialen Zurücknahme an der unteren Schaftkante von 0,01-0,15 mm.

5. Tauchkolben nach einem der vorhergehenden Ansprüche, dadurch gekennzeichnet, daß in dem Inneren des Kolbenschaftes zwischen den Öffnungen zum Durchführen des Kolbenbolzens ein horizontal verlaufender Regelstreifen (5) aus einem Material mit gegenüber dem Schaftmaterial höherer Biegesteifigkeit und geringerem Ausdehnungskoeffizienten eingeformt ist.

## Claims

1. A plunger piston (1) for internal combustion engines, particularly Otto-cycle motor car engines, in which the gudgeon pin bosses (2) are connected solely directly and at right-angles to the piston crown without touching the piston skirt and the ring strip which accommodates the piston ring grooves (3, 4) and which starts form the piston crown and merges into the piston skirt, characterised in that the plunger piston is in one piece, comprises recesses through which the gudgeon pin can pass and has the following dimensions :

H/D = 0,20-0,35
T/D = 0,22-0,28 or T/D = 0,295
A/D = 0,15-0,25
B/D smaller than or equal to A/D

in which

D = piston diameter
H = compression height
T = distance between the radially outer boss surfaces and the gudgeon pin axis
A = skirt height below the bottom ring groove in a peripheral range of alpha = 0 to at least alpha = 15 degrees and a maximum alpha = 60 degrees on either side of the oscillating plane of the connecting rod
B = skirt height below the bottom ring groove in the direction of the gudgeon pin axis.

2. A plunger piston according to Claim 1, characterised by

B /D = 0,03-0,1

3. A plunger piston according to Claim 1 or 2, characterised in that altogether just two ring grooves (3 and 4) are provided for a compression ring and an oil control ring.

4. A plunger piston according to one of the preceding Claims, characterised in that the skirt area of height A the skirt end at a height of 10 to 25 % of the height A is slightly and radially retracted, with a maximum radial retraction at the bottom edge of the skirt amounting to 0.01 to 0.15 mm.

5. A plunger piston according to one of the preceding Claims, characterised in that in the interior of the piston skirt, between the apertures through which the gudgeon pin passes, there is a horizontally extending regulating strip (5) consisting of a material of greater bending strength and lesser expansion coefficient than the material of the piston skirt.

## Revendications

1. Piston (1) plongeur pour moteurs à combustion interne, en particulier pour moteurs Otto de voitures particulières, dans lequel les paliers (2) d'axe sont reliés exclusivement, directement et perpendiculairement à la tête de piston, sans être en contact avec la jupe de piston ni avec la bande annulaire partant de la tête de piston, rejoignant la jupe de piston, et qui loge les gorges (3, 4) pour segments, caractérisé en ce que le piston plongeur est en une seule pièce, il présente dans la jupe des évidements pour permettre le passage de l'axe de piston dans la jupe et il possède les dimensions suivantes :

H/D = 0,20 à 0,35
T/D = 0,22 à 0,28 ou T/D = 0,295
A/D = 0,15 à 0,25
B/D inférieur ou égal à A/D

avec

D = diamètre de piston
H = hauteur de compression
T = distance entre la surface du palier située radialement à l'extérieur et l'axe de piston,
A = Hauteur de la jupe en dessous de la gorge inférieure pour segment, sur une partie périphérique de alpha = 0 à α = au minimum 15 degrés et α = au maximum 60 degrés, de chaque côté du plan d'oscillation de la bielle.
B = Hauteur de la jupe en dessous de la gorge inférieure pour segments, dans le sens de l'axe géométrique de l'axe de piston.

2. Piston plongeur selon la revendication 1, caractérisé en ce que

B/D = 0,03 à 0,1

3. Piston plongeur selon la revendication 1 ou 2, caractérisé en ce qu'au total on ne prévoit que deux gorges (3 et 4) pour segments, destinées à un segment d'étanchéité et à un segment râcleur d'huile.

4. Piston plongeur selon une des revendications précédentes, caractérisé en ce que, dans la zone de la jupe de hauteur A, l'extrémité de la jupe est légèrement en retrait radialement sur une hauteur qui est de 10 à 25 % de la hauteur A, avec un retrait radial maximal, sur le bord inférieur de la jupe, de 0,01 à 0,15 mm.

5. Piston plongeur selon une des revendications précédentes, caractérisé en ce qu'est incorporée à l'intérieur de la jupe de piston, une bande (5) annulaire qui s'étend horizontalement entre les ouvertures destinées au passage de l'axe de piston, sert à stabiliser les dimensions et qui est réalisée en un matériau ayant, par rapport au matériau de la jupe, une plus grande résistance à la flexion et un coefficient de dilatation plus faible.

Fig.1

(a)

(b)

(c)

Fig. 2

(a)

(b)

(c)

Fig. 3

(a)

(b)

(c)